# EUROPEAN PATENT APPLICATION

(11) **EP 3 547 526 A1**
(43) Date of publication of application: **02.10.2019**
(21) Application number: 18164728.0
(22) Date of filing: 28.03.2018
(51) Int. Cl.: H02M 7/483, H02M 1/00

(54) **CONVERTER CONTROLLER**

(71) Applicant: General Electric Technology GmbH, 5400 Baden (CH)
(72) Inventor: BURNETT, Alistair, Stafford, Staffordshire ST17 4LX (GB); SPIBEY, Neil, Stafford, Staffordshire ST17 9AP (GB); GREGOIRE, Jerome, Stafford, Staffordshire ST16 1WS (GB)
(74) Representative: Brevalex

(57) **Abstract**

In an example, a controller for a first sub-unit of a converter is provided. The converter comprises a plurality of converter sub-units, each sub-unit comprising at least one switching element of the converter. The controller comprises an interface configured to receive a data packet transmitted from a second sub-unit of the converter, the data packet comprising status information of the second sub-unit; and processing circuitry configured to process the data packet to determine control data to control at least one operation of the first sub-unit.

## Description

The present invention relates to controllers for sub-units of converters comprising a plurality of converter sub-units, converters comprising such controllers and methods of operation thereof.

### BACKGROUND OF THE INVENTION

Converters are used to change the voltage level of a power source and/or to transfer power between a Direct Current (DC) and an Alternating Current (AC). An example of a High Voltage Direct Current (HVDC) converter is a Modular Multi-Level Converter (MMC) which is a class of Voltage Source Converter (VSC) with a scalable topology that can be designed to operate at high voltages. MMCs can provide excellent harmonic performance and these advantages, combined with relative ease of timing control, have made MMCs the subject of much ongoing research and development. Other examples of converters are Line Commutated Converters (LCC) and Alternate Arm Converters (AAC).

In some examples, converters comprise a plurality of converter sub-units. For example, each sub-module, or each valve, of an MMC or an LCC may be considered as a converter sub-unit, each providing a separately controlled voltage source of the MMC.

For example, an MMC VSC may comprise at least one (often three parallel) phase limbs, each limb comprising two valves. Each valve is made up of a plurality of sub-units known as submodules, each comprising an energy storage element, usually a capacitor. The submodules are arranged such that the energy storage element therein can be switched in or out of a series connection with the other energy storage elements in the valve.

MMCs may comprise many submodules, for example there may be hundreds of individual submodules in each valve which work together to create overall system waveforms which are smooth, or low in harmonic content, for connection to a power transmission network. The use of the multilevel approach also makes the system modular and easily expandable to achieve the required power and voltage transmission levels.

In order to respond to an active and/or reactive power demand from the MMC, energy and voltage supplied by each submodule is controlled. Semiconductor devices may be used in the control of submodules of MMCs and can be used in switching the energy storage element as described above. Electrically isolated communication methods (e.g. optical communication) may be used within converters (for example, in the case of MMCs, in communicating with each submodule) used in favour of a wireline system since the ground level system control is in two-way communication with all the submodules to provide control and monitoring functions, and each converter sub-unit may be at several hundred kilovolts potential from ground level.

MMCs are typically more complex to control and monitor in comparison to other types of converters, such as Line-Commutated Converters (LCC), because a submodule of an MMC has a different switching pattern to its neighbours in the valve and the hardware in each submodule level may therefore generally be more complex than in a LCC. However, other converters such as LCCs and AACs may also comprise converter sub-units, i.e. individual components which may separately carry out switching and/or voltage conversion operations to provide the overall functionality of the converter.

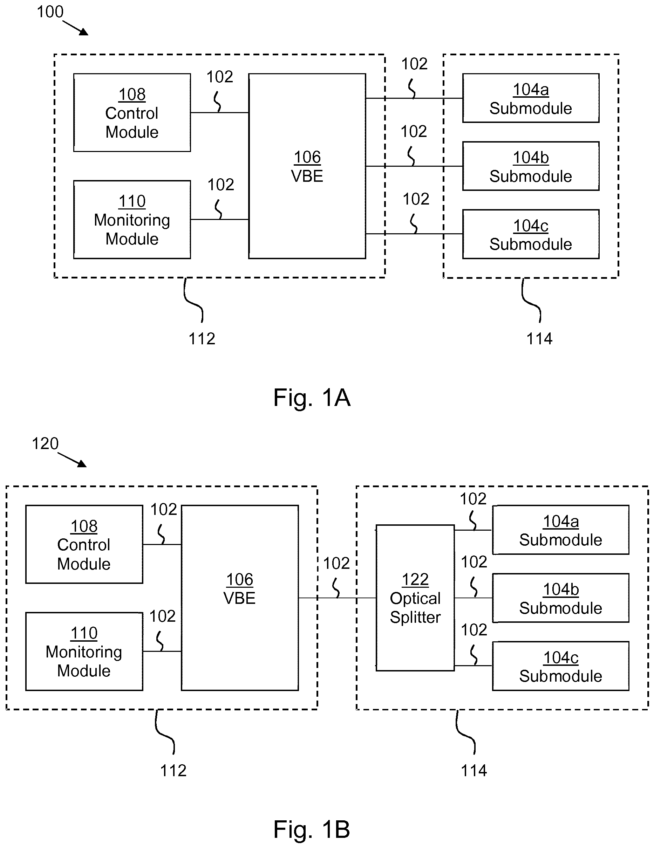

Examples of prior art converter fibre optic communications in a converter, such as an MMC 100 are shown in Figure 1A and Figure 1B. Figure 1A shows an MMC 100 in which optical fibres 102 are connected between each submodule 104a, 104b, 104c of the converter 100 and a valve base electronics (VBE) interface 106. The VBE interface 106 is also connected to a control module 108 and a monitoring module 110, the control module 108 provides control signals to the VBE interface and the monitoring module 110 monitors operation of the VBE interface 106 and the submodules 104a, 104b, 104c. In this example the submodules 104a, 104b 104c are located in a valve 114 and the VBE interface 106, control module 108 and the monitoring module 110 are located in a control room 112, remote from the valve 114.

Figure 1B shows alternative prior art converter fibre optic communications in MMC 120. The MMC 120 comprises the components shown in Figure 1A, and it additionally comprises an optical splitter 122 located within the valve 114. Although in Figure 1B there is only one optical splitter 122 shown, in practice there may be several optical splitters, for example each valve may have an optical splitter and subgroups of modules within each valve may be associated with an optical splitter. The VBE interface 106 is connected to the optical splitter 122 with a single optical fibre 102. This reduces the number of fibres which are required to run between the valve 114 and the control room 112 compared with the MMC 100 shown in Figure 1A.

In Figures 1A and 1B, only three submodules are shown, however in practice an MMC may have many more submodules.

Further examples in relation to optical communications networks may be found in WO2013178249, which is incorporated herein by reference to the fullest possible extent.

According to a first aspect of the invention, there is provided a controller for a first sub-unit of a converter, the converter comprising a plurality of sub-units, each sub-unit comprising a switching element of the converter. The controller comprises an interface configured to receive a data packet transmitted from a second sub-unit of the converter, the data packet comprising status information of the second sub-unit, and processing circuitry configured to process the data packet to determine control data to control at least one operation of the first sub-unit.

For example, the sub-unit may comprise one or more switching elements within a converter. In some examples the sub-unit may be a voltage source of a converter, for example a voltage source of a voltage source converter (VSC), such as a Multilevel Modular Converter (MMC). As used herein a voltage source within a converter is a voltage source which contributes to the output voltage of the converter. For example a sub-unit may comprise one or a group of sub-modules of a Multilevel Modular Converter (MMC) or an arm of an Alternate Arm Converter (AAC) or a thyristor of a Line Commutated Converter (LCC). In a LCC a sub-unit may comprise at least one switching element of a series connected chain of switching elements, for example thyristors, and optionally associated protection apparatus. Other examples which may comprise sub-units are Static Synchronous Compensator (STATCOM), Static VAR Compensator (SVC) or Thyristor Switch Capacitor (TSC).

In some examples, a plurality, or each of the sub-units, of a converter may be provided with such a controller, thereby allowing the controller of each sub-unit to determine control data for the sub-unit based on data packets received comprising status information from other sub-units in the converter. This allows distributed control of a converter, in which controllers (which may be at least partially autonomous controllers) are distributed throughout the apparatus. In contrast to previously proposed solutions for control of a converter, in which each sub-unit sends status information to a centralised controller (e.g., the control module 108 for monitoring module 110 described above) which in turn derives control data for controlling each sub-unit, the sub-units receive data directly from one another and derive their own control data. Such control data may for example be derived based on a status (i.e. as provided in the status information) of the first sub-unit, data received in one or more data packets from one or more other sub-units and/or data providing an indication of at least one of a status of the convertor and a status of an electrical network.

The first sub-unit comprises at least one switching element and in some examples the controller is to control switching of the switching element based on the control data. The switching element(s) may be arranged so they can switch at least one energy storage device, such as a capacitor, in or out of a series connection with other energy storage devices in a valve. The switching element(s) may comprise any combination of a thyristor, a gate turn off (GTO) switch, an insulated-gate bipolar transistor (IGBT), an injection-enhanced gate transistor (IEGT), an integrated gate-commutated thyristor (IGCT), a diode, a TRIAC, a transistor or a metal-oxide-semiconductor field-effect transistor (MOSFET). Such switching elements(s) may be controlled based on the determined control data. In some examples, the control data may control communications and/or signalling of the sub-unit (e.g. transmit and/or receive windows of the controller, mode of communication, such as communication frequency or structure of the data packets, or instructions to operate a mechanical bypass switch).

In some examples, the interface is configured to receive an indication of at least one of a status of the convertor and a status of an electrical network, and the processing circuitry is configured to process the received indication to determine control data to control at least one operation of the first sub-unit. This may allow a sub-unit to react to 'global' conditions, such as a grid fault, or a converter shut down instruction in addition to the status of another sub-unit in the converter.

In some examples, the interface is configured to receive data packets from a plurality of sub-units, and the processing circuitry is configured to process the received data packets to determine control data to control at least one operation of the first sub-unit. A controller for a sub-unit may thereby coordinate the operation of the sub-unit with that of the other sub-units within the converter. By receiving data from a plurality of sub-units, it may be determined if a particular condition is a global or widespread condition, or a local or isolated condition. For example, if each of a plurality of sub-units in the same valve as the first sub-unit has a voltage which is below an anticipated voltage (and in some examples, the first sub-unit also has an 'under voltage' condition), it may be determined, by the controller of a sub-unit, that the valve as a whole has an under voltage condition, and appropriate control data to increase the overall voltage may be determined. If instead, just one or two sub-units have such a condition, the first sub-unit may continue to operate without change. Likewise, appropriate action may be taken if it is determined that there is an 'over voltage' condition. For example in an LCC, in the event of an over voltage condition in one thyristor can cause another thyristor to switch.

In some examples, the status information (for example, data packets) may be received wirelessly. In some examples wireless communications such as Wi-Fi, Zigbee, Li-Fi or Bluetooth may be used for such communications. In other examples ultrasound communications or infrared communications may be used. In some examples, the status information may be received directly from the second sub-unit (for example without any intervening routing and/or processing).

In some examples, data may be received at the first sub-unit from a subset of the sub-units of a converter, for example those sub-units in the same valve, or within a portion of a valve. Limiting the number of sub-units in communication may speed up the control processes and, in some examples, global or widespread conditions may be detected based on status data of just a subset of sub-units.

The interface may be further configured to transmit a data packet comprising status information of the first sub-unit. In other words, the controller of a sub-unit may, in addition to receiving data packets, also transmit data packets, which may in some examples be received by other sub-units in the converter, thereby allowing two way (and in some examples, direct) communication between sub-units in the converter.

In some examples, the status information received in a data packet comprises at least one of: a presence of a fault condition in the second sub-unit; a command state of the second sub-unit (e.g., indication that any of a rapid discharge command, a blocking command, a gating command, for example in response to a DC fault, has been executed); a total achievable voltage of the second sub-unit; a voltage level of the second sub-unit; a health of the second sub-unit; a switching state of the second sub-unit (e.g., whether the second sub-unit is inserted in the valve, in a bypass state, or a blocked state, and/or a state of an individual switching element therein); a circuit state of the second sub-unit (e.g., a state of a power circuit of the second sub-unit), an electrical parameter of the second sub-unit (e.g. a sub-unit voltage, a rapid discharge overload indication, current, a voltage of an energy storage device such as a capacitor) and/or an indication of a currently implemented switching strategy or the like and/or a thermal parameter of the second sub-unit.

In some examples the status information may be provided to (in addition to sub-unit(s)) a monitoring and control unit. In such examples, a data packet may comprise a monitoring signal, and the monitoring signal may comprise at least one of: sub-unit voltage, sub-unit state, rapid discharge overload, and current. Such monitoring information may be provided in the same data packet and/or using the same communications medium as the status information provided above, or may be provided using a different data packet/communications medium. Monitoring signals from a plurality of sub-units may be monitored by a monitoring module to provide information relating to the operation of the converter, and may be used in determining global control strategies. In some examples, such monitoring information may be presented to an operator or be fed back to assist in controlling the converter. A monitoring signal is one which is intended to be received by a centralised monitoring module, rather than to other sub-units in the converter. The monitoring signal may comprise different information to that transmitted in the data packets to the other sub-units. In some examples the method of transmitting the monitoring signal may be different to that used in transmitting data packets to other sub-units.

The status information provided in a data packet may comprise any information which assists the first sub-unit to determine appropriate control data for operation of the first sub-unit. As noted above, a sub-unit may receive data packets from multiple sub-units, allowing a sub-unit controller to build up knowledge of the operation of a group of sub-units, a valve in the converter or the whole converter. This allows the controller to determine appropriate control data for the operation of the first sub-unit.

According to a second aspect of the invention a method of operating a converter is provided. The method comprises transmitting, from a first sub-unit of the converter, a data packet comprising status information of the first sub-unit, receiving the data packet at a second sub-unit of the converter, and controlling at least one operation of the second sub-unit at least in part based on the received information. This allows coordination of the operation of the second sub-unit with the status of the first sub-unit.

In some examples the data packet comprises data describing the operational state of the first sub-unit. For example, the data packet may comprise information relating to at least one of: the presence of a fault condition in the first sub-unit, the activation of a rapid discharge command, blocking command and/or gating command in the first sub-unit, a total achievable voltage of the first sub-unit, a health of the first sub-unit, a sub-unit switching state, a sub-unit capacitor voltage and the like.

In some examples controlling at least one operation of the second sub-unit comprises controlling at least one of a switching state of the second sub-unit or a data transmission of the second sub-unit. Controlling a switching state may comprise controlling at least one switching element (for example, to insert an energy storage device of a sub-unit into a series connection with other sub-units, to bypass the energy storage device, or to block the energy storage device). Controlling the data transmission may comprise controlling a duty cycle or timing of a transmission, a mode of data transmission (for example, a frequency of data transmission), and/or a content of data transmission (for example, the control data may specify that particular status information is to be included or omitted from transmission).

According to a third aspect of the invention, there is provided a converter comprising a plurality of sub-units, wherein a first sub-unit is adapted to transmit a data packet comprising status information to a second sub-unit, and the second sub-unit is adapted to implement at least one control operation based at least in part on the received data packet, which in some examples may be received directly from the first sub-unit. Therefore the second sub-unit is controlled, at least in part, based on the status of the first sub-unit, allowing coordination of different sub-units within the converter without a centralised control system.

In some examples the first sub-unit comprises a wireless transmitter for transmitting data packets and the second sub-unit comprises a wireless receiver for receiving data packets. The data packets may for example be transmitted using time division multiplexing or frequency division multiplexing. Furthermore, by transmitting the data packets wirelessly data packets can be received at a plurality of other sub-units, without the need for physical communication links, for example optical fibres, as has been described above. By using wireless transmission, costs can be reduced as large quantities of optical fibres are no longer required. In some examples wireless communications such as Wi-Fi, Zigbee, Li-Fi or Bluetooth may be used for such communications. In other examples ultrasound communications or infrared communications may be used.

In some examples, data packets may be sent with an identifier, identifying the transmitting sub-units. This may allow a receiving sub-unit to understand its relationship to another sub-unit, and/or may allow for filtering of received data packets, for example, such that each sub-unit may selectively determine whether to process data received from a particular sub-unit based on the identifier.

In some examples the sub-units are adapted to transmit data packets comprising status information to a plurality of other sub-units. In some examples each sub-unit is adapted to communicate with a subset of the plurality of sub-units.

In some examples, the sub-units may broadcast the status information to all the other sub-units in the converter. In other examples only a subset of sub-units may receive the transmission, for example only sub-units within a valve may receive the transmission or only sub-units within a predefined range of the transmitting sub-unit may receive the transmission. This may simplify the system by reducing the computing resources required. Furthermore the quantity of data received at each sub-unit may be reduced, as each sub-unit does not need to process data packets from every other sub-unit in the converter. The strategy used may depend on the available data rate and operational requirements of the converter. In some examples the sub-units may be split into groups, and each group may use a different data transmission scheme, for example each group may have an assigned frequency slot. In other examples the transmitted data packets may comprise an identifier that allows a receiving sub-unit to determine if the transmission originated from a sub-unit within the predefined group. In other examples Code Division Multiple Access (CDMA) may be used to allow communication between multiple sub-units. In other examples, other communications protocols may be used.

The converter may comprise a monitoring and control unit, wherein the first sub-unit (or any sub-unit of the converter) is adapted to transmit data packets comprising status information to the monitoring and control unit and to receive control data therefrom. For example, such a monitoring and control unit may comprise a control module 108 and monitoring module 110 as described above.

In some examples the second sub-unit is adapted to receive data packets from a plurality of other sub-units, and further adapted to receive an indication of at least one of a status of the convertor and a status of an electrical network, and to implement a control operation based on the received data packets and the received indication. The indication of the status of the converter or the status of the electrical network may be used to coordinate the timing of switching of the sub-units.

Features described in relation to one aspect of the invention may be combined with those described in relation to other aspects of the invention.

Example embodiments of the present invention are now described by way of example only with reference to the accompanying Figures in which:
**Figures 1A-1B** are prior art examples of fibre optic communications within an MMC;
**Figure 2A** is an example of a converter;
**Figure 2B** is an example of a sub-unit of a converter;
**Figure 3** shows a first sub-unit and a second sub-unit of a converter;
**Figure 4** shows communications within a converter; and
**Figure 5** is an example of a method of operating a converter.

Figure 1A and Figure 1B show examples of prior art fibre optic communications in MMCs, and have been described above.

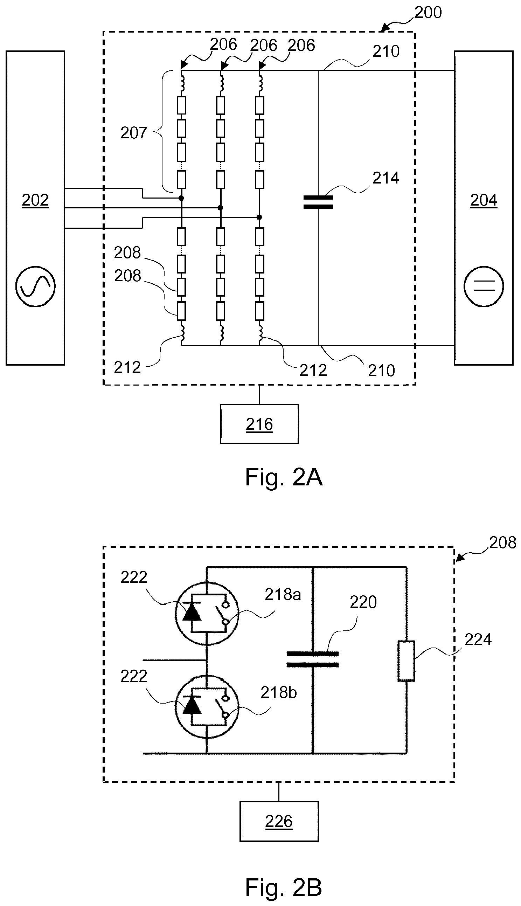

Shown in Figure 2A is an example of a converter 200. The converter 200 in this example is a multilevel modular converter arranged between an AC network 202 and a DC network 204. The multilevel modular converter 200 includes respective phase limbs 206 (collectively forming a bridge) of series-connected converter sub-units, in this examples, MMC submodules 208 (only some of which are labelled for the sake of clarity), arranged between DC poles 210. The submodules 208 are further described in relation to Figure 2B below. Each limb 206 is made up of a first and a second (or top and bottom) valve 207 (only one of which is labelled for clarity). Therefore, as will also be familiar to the skilled person, such a converter 200 may be described as comprising six valves 207. The valves 207 comprise the series connection of submodules 208 between the AC connection to a limb 206 and a DC pole 210.

A valve reactor 212 (again, only two are labelled to avoid complicating the Figure) is also provided in each converter valve 207 to limit transient current flow between converter limbs 206 and thereby enable the connection and operation of the converter limbs 206. Also provided is a DC link capacitor 214, which operates to smooth the DC voltage. The converter 200 is under the control of converter control circuitry 216, which controls monitoring and control functions, and may provide a monitoring and control unit of the multilevel modular converter 200. A broken line' notation is used in the limbs 206 to illustrate that there may be fewer or more submodules 208 provided than are illustrated.

As will be appreciated by the skilled person, a submodule 208 in this context is one of a number of such modules which are used to synthesise a voltage form in the converter 200 through selective switching of switches therein.

As shown in Figure 2B, in this example, each converter submodule 208 comprises a pair of switching elements in the form of series-connected IGBTs 218a, 218b connected in parallel with a capacitor 220, each associated with a unidirectional current device, in this case a diode 222, arranged in parallel with the IGBT switch 218. A first IGBT 218a is arranged between the terminals in series with the capacitor 220 and a second IGBT 218b is arranged to bypass the capacitor 220 when on. The capacitor 220 of each submodule 208 is configured to have a sufficiently high capacitive value in order to constrain the voltage variation at the capacitor terminals. The capacitor 220 is associated with a bleed resistance 224 to allow it to discharge. A sub-unit controller 226 is also provided and is arranged to switch the IGBTs 218a, 218b. The sub-unit controller 226 may be arranged to implement autonomous protection strategies and responds to instructions from converter control circuitry 216. In some known converter designs, communication between the sub-unit controller 226 and converter control circuitry 216 utilises fibre optics, as is described in relation to Figures 1A-B.

The functioning of such a converter 200 will be familiar to the skilled person. Briefly, however, each submodule 208 as shown in Figure 2B may be controlled to assume different switching states in normal operation. The capacitor 220 is either inserted into the circuit or bypassed. More specifically, the capacitor 220 is inserted into the circuit when the first IGBT 218a is on and the second IGBT 218b is off, and it is bypassed when the first IGBT 218a is off and the second IGBT 218b is on. By controlling the IGBTs 218 in the submodules 208, voltage forms can be accurately synthesised.

As will be appreciated by the skilled person, the arrangement of Figure 2B is known as a half-bridge arrangement, and provides a 2-quadrant unipolar module that can provide zero or positive voltage and can conduct current in two directions. Although herein a half-bridge submodule design is described, this is purely by way of example and other sub-unit designs are possible, such as a full bridge arrangement (or full H bridge), in which sub-units comprise two pairs of switching elements (usually IGBTs) and an energy storage device (usually in the form of a capacitor). The pairs of switching elements are connected in parallel with the capacitor. This defines a four-quadrant bipolar module that can provide negative, zero or positive voltage and can conduct current in two directions. Full bridge sub-units give certain advantages, such as improved fault handing (in particular, improved DC fault handling), but require more switching components and have higher operational losses. As the skilled person will appreciate, other sub-unit designs are being developed, including multiple level submodules (for example as described in WO2014/005634, WO2012/04027 and US2008/0198630, which are incorporated herein to the fullest extent allowable). Indeed, a converter may be a hybrid, containing more than one type of sub-unit 208. The principles set out herein could be applied to any converter sub-unit design as appropriate.

Further, the skilled person will be aware of alternative MMC designs, and the arrangement shown in Figures 2A-B is purely by way of an example of one such design. For example, the components, and/or the connections there between, may be configurable.

In addition, the converter may comprise a different converter type such as a Line Commutated Converter (LCC), an Alternate Arm Converter (AAC), a Static Synchronous Compensator (STATCOM), a Static VAR Compensator (SVC) or a Thyristor Switch Capacitor (TSC).

Moreover, while in the example above, the converter sub-unit described is a submodule of an MMC, in another example, the converter sub-unit may comprise a submodule of a different type of converter, or a group of submodules, or an arm, limb or valve of a converter, an individual switching element (e.g. a thyristor) associated with a controller, or the like.

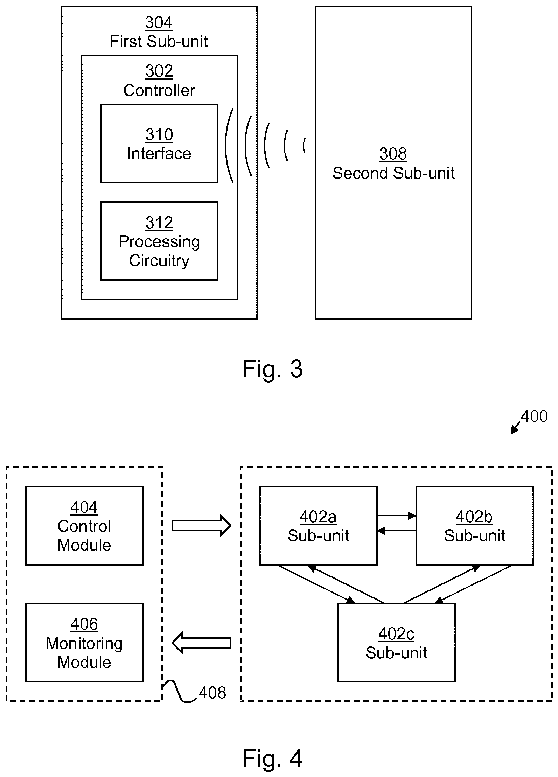

Figure 3 is an example of a controller 302 for a first sub-unit 304 of a converter, and shows the first sub-unit 304 and a second sub-unit 308 of the converter. The controller 302 comprises an interface 310 and processing circuitry 312. In this example the interface 310 receives a data packet transmitted from the second sub-unit 308, the data packet comprising status information of the second sub-unit. On receiving the data packet, the processing circuitry 312 of the controller 302 processes the data packet to determine control data to control at least one operation of the first sub-unit 304.

In this example the data packet is transmitted using a wireless communications protocol, for example Wi-Fi, however in some examples the data packet may be transmitted using ultrasonic communication or optical communication, for example by infrared light.

In practical examples, the second sub-unit 308 may be arranged in a similar manner to the first sub-unit 304, for example comprising a controller, an interface and processing circuitry.

Figure 4 is an example of a converter 400. In this example the converter 400 is depicted as having three sub-units 402a, 402b, 402c, however in practice a converter may have more than three sub-units (for example, where the converter is an MMC, each of the submodules may comprise a converter sub-unit, and there may be tens or even hundreds of such submodules). In this example each sub-unit 402a, 402b, 402c is in (direct) communication with every other sub-unit 402a, 402b, 402c. For example sub-unit 402a transmits data packets which are received by the other sub-units 402b, 402c. Similarly sub-units 402b, 402c transmit data packets which are received by sub-unit 402a. The data packets may contain status information relating to the status of the sub-unit 402a, 402b, 402c sending the data packet. Such information may describe the state of a component within the sub-unit, for example the state of power circuits, a switching state (e.g., the state of IGBTs, thyristors or the like, or whether the sub-unit as a whole is in a particular state such as a bypass state or a blocked state), and/or may indicate a parameter of an energy storage device, for example a voltage of a sub-unit capacitor. In some examples, the information may relate to the overall state of the sub-unit, for example the presence of a fault condition, the health of the sub-unit or the total achievable voltage. In some examples, the status information may comprise the execution of a command within the sub-unit, such as a rapid discharge command or blocking command and gating of a switching element (e.g. gating of a thyristor for DC faults).

In this example, the converter 400 comprises a monitoring and control unit 408 comprising a control module 404 and monitoring module 406. The monitoring module 406 may process signals received from one or more of the sub-units 402 and the control module 404 may derive control data for transmission to one or more of the sub-units 402. This may for example be carried out as in known converter circuitry, such as that described in relation to Figures 1A and 1B above. In some examples, the monitoring module may also receive an indication of the status of an electrical network in which the converter 400 is operating. For example the output of current transformers and voltage transformers on the AC and DC sides of the network within which the converter is operating may be determined.

The control of such a converter 400 allows the use of different methods of control, compared with the prior art converters described in relation to Figures 1A and 1B, as the control functions are distributed throughout the sub-units 402a, 402b, 402c. Examples of methods of such control are outlined below.

For example, sing the methods and apparatus set out herein, capacitor overvoltage protection for the converter may be achieved in several ways. To consider an example in which the converter is an MMC or an LLC, and the sub-units comprise submodules or groups of submodules. If at least some (or all) of the sub-units in a valve have an awareness that all the capacitor voltages in other sub-units within the valve are rising using the methods set out herein, then these the sub-units can activate their rapid discharge circuits at the same time, thereby coordinating a 'ride-through' of a voltage swell more effectively. In other examples if all sub-units (or groups of sub-units) have an awareness that, collectively, rapid discharge resistors are reaching the limits of their thermal capacity. Each controller may then determine to enter a blocked state, effectively blocking the valve.

In other examples if certain sub-units (or groups of sub-units) are experiencing capacitor overvoltage (for example because of a ground level control fault), and status information is shared amongst the sub-units, then sub-units can each decide to enter a bypass state if the sub-unit has a margin on other sub-units (or groups of sub-units) capacitor voltage values. Alternatively a sub-unit may decide to activate rapid discharge if the shared status information incites that there is no capacitor voltage margin, that is, the sub-unit is at maximum voltage and cannot absorb any more without failing. This reduces the chances of a cascade fault occurring and may be particularly effective with topologies having a full bridge arrangement, where sub-units can reverse the direction of their capacitor voltage to control and decrease a fault current.

Capacitor under voltage correction may be achieved by each sub-unit having an awareness via received status information that certain other sub-units have under voltage, thus allowing preference to be given to switching positive current into the under voltage capacitors to bring the capacitor voltages in a valve quickly back into balance.

In examples in which the converter sub-unit comprises a valve, each valve may be directly aware of the state of another valve.

A valve flashover is when a dielectric breakdown of the insulation systems within the valve occurs, for example between vertical levels, or tiers, within a valve. The current may rise quickly, and so fast protection is needed to prevent widespread damage. In known examples, IGBT desaturation protection is used to detect a flashover, and the IGBT can be turned off in 10µs, however there may then be a wait of approximately 10ms for a bypass switch to engage. During this delay the submodule cannot take any further action and cannot be supported by neighbouring submodules until the valve base electronics intervene at least 100µs later. According to the present invention, during a valve flashover, a sub-unit controller may determine that the current measured (for example by sub-unit sensors, and provided as status information) in certain sub-units has suddenly exceeded the normal operating level. Where there are a plurality of sub-units within a valve, if this occurs in a significant number of sub-units in a valve, then all the sub-units within a valve can react together to limit the current. There may be a pause while the sub-units wait for the current to reduce to normal operating levels, and if it does not then a decision may be made to block the whole valve, by each sub-unit independently deciding and taking action to block the valve.

During an over current event, the action taken may depend on the direction of the current. For example, in a half-bridge topology submodule based converter, if the current is in the forward direction in all submodules, as measured by current sensors, then the submodules can be used to limit the current briefly. If the over current event does not clear then the valve can be blocked. If the current is in the reverse direction, the valve can be blocked and the thyristor gated on to absorb the fault current out of the bypass diodes. Other topologies may utilise alternative strategies.

If IGBT desaturation protection is activated in certain sub-units of a valve (as may be indicated in transmitted status information), the other sub-units in the valve can work to keep the desaturated levels in a safe state while they have time to recover. This could prevent additional protections from being activated. For example, there may be bypass switches (which may be provided to 'short circuit' or bypass sub-units altogether) associated with bypass units and such measures may mean that bypass switches of the affected sub-units do not have to be operated.

In a blocked valve which is to be in "hot standby", (i.e. with capacitors charged but not transferring transmission current), there is a constant power load, which acts as a negative impedance i.e. the lower the capacitor voltage is then the higher the current drawn by the to keep the power supplied the same. This causes the capacitors in a valve to diverge away from the control point over seconds/minutes of standby. In such cases, capacitor balancing can be achieved by observing the divergence of capacitor balance within the valve, which may be based on received status information, and the sub-unit controllers may control the sub-units to act to stabilise it only when required thus reducing the blocked state electrical losses. This allows facilitates provision of a 'hot standby' state.

With control functions distributed throughout the sub-units, the capacitor voltage balancing algorithm can be more adaptive to valve current levels by reducing the switching frequency to reduce switching losses. This is achievable since the 'ripple voltage' on the capacitor is lower at lower current levels so switching is only necessary to generate the overall converter waveforms and the needs of capacitor balancing therefore become secondary. Likewise, at lower terminal voltage, fewer sub-units are required to switch so switching losses can be adaptively reduced. Therefore, switching losses can be reduced at low load current operation or low voltage operation.

In another example, a ground level control loop (which may be relatively slow, for example being based on a 50Hz signal) may set a voltage vector for a valve. This may be sent wirelessly to all the sub-units, for example from the monitoring and control unit 408. However, in addition, if the valve sub-units know each other's status, the controllers of the individual submodules may determine their own position in a switching sequence (for example, according to a hierarchical switching algorithm) in order to track the desired voltage vector. Further examples in relation to vector control techniques as applied to converters may be found in EP2863534, which is incorporated herein by reference to the fullest possible extent.

In some examples, such controls may be sent from a sub-unit controller. For example, a sub-unit controller may be 'elected' to act as a valve controller, or to act as a controller for a subset of the sub-units. For example one sub-unit in a group may have a controller responsible for controlling the sub-units in the group, for example one in every eight (or one in every n, where n is an integer) sub-units may comprise a controller.

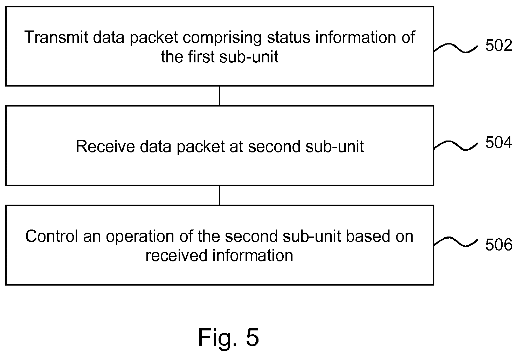

Figure 5 shows a method of operating a converter. In block 502 a data packet is transmitted from a first sub-unit of the converter, the data packet comprising status information of the first sub-unit. In block 504 the data packet is received at a second sub-unit of the converter. The second sub-unit may for example be a neighbouring sub-unit to the first sub-unit, be a relatively near neighbour thereof, or may be located within the same valve. In some examples any sub-unit in the converter may receive a data packet from any other sub-unit.

In block 506 at least one operation of the second sub-unit is controlled, at least in part, based on the received information. The second sub-unit may also consider its own status and/or the status of at least one further sub-unit as received in a data packet in determining what operations to perform. In this way the operation of multiple sub-units can be coordinated without a centralised controller, such as that described in relation to Figures 1A-B. However, in some examples, the received information may be supplemented by data received from a centralised controller and/or monitoring apparatus of the converter and/or an electrical network.

Each sub-unit can receive information from other sub-units within the converter and process the received information to determine the operation of the sub-unit. In prior art converter communications, data is routed through optical fibres to the valve base electronics resulting in control being provided through a centralised control means. This introduces a potential bottleneck in the system, with each valve relying on the valve base electronics for signals for capacitor voltage balancing between sub-units within a valve. Furthermore the data rate is limited by a Time Division Multiplexing (TDM) cycle time of the valve base electronics. Therefore a centralised control means limits the complexity of the control signals which may be sent. By providing each sub-unit with a controller in communication with the controllers of other sub-units, this bottleneck in the system may be removed, increasing the systems modularity, decentralising control, and improving redundancy and scalability.

When both a centralised control means and local sub-unit level protection are provided, both can work against each other, for example to prolong a fault. A sub-unit within a valve may experience an overvoltage at a capacitor as a result of the valve base electronics failing to manage the converter control. A sub-unit within the valve which is provided with local level protection may, absent additional control, override the instructions from the valve base electronics and instigate a protective electronic bypass to prevent the capacitor voltage rising further. However in some circumstances this may be counterproductive as it may result in additional voltage across other sub-units, which then also instigate a protective electronic bypass. However, by providing sub-unit controllers which are in communication with other sub-units, such behaviour can be avoided as the operation of the different sub-units in the valve can be coordinated.

In some examples, the methods and apparatus may be implemented, at least in part, as machine readable instructions, such as any combination of software, hardware, firmware or the like. Such machine readable instructions may be included on a computer readable storage medium (including but not limited to disc storage, CD-ROM, optical storage, etc.) having computer readable program codes therein or thereon.

Machine readable instructions may, for example, be executed by a general purpose computer, a special purpose computer, an embedded processor or processors of other programmable data processing devices to realize the functions described in the description and diagrams. In particular, a processor or processing apparatus may execute the machine readable instructions. Thus functional modules of the apparatus and devices may be implemented at least in part by a processor executing machine readable instructions stored in a memory, or a processor operating in accordance with instructions embedded in logic circuitry. The term 'processor' is to be interpreted broadly to include a CPU, processing unit, ASIC, logic unit, or programmable gate array etc. The methods and functional modules may all be performed by a single processor or divided amongst several processors.

Such machine readable instructions may also be loaded onto a computer or other programmable data processing devices, so that the computer or other programmable data processing devices perform a series of operations to produce computer-implemented processing.

Further, the teachings herein may be implemented in the form of a computer software product, the computer software product being stored in a storage medium and comprising a plurality of instructions for making a computer device implement the methods recited in the examples of the present disclosure.

While the method, apparatus and related aspects have been described with reference to certain examples, various modifications, changes, omissions, and substitutions can be made.

It should be noted that the above-mentioned examples illustrate rather than limit what is described herein, and that those skilled in the art will be able to design many alternative implementations without departing from the scope of the appended claims. Features described in relation to one example may be combined with features of another example.

The word "comprising" does not exclude the presence of elements other than those listed in a claim, "a" or "an" does not exclude a plurality, and a single processor or other unit may fulfil the functions of several units recited in the claims.

## Claims

1. A controller (302) for a first sub-unit (304, 308, 402a-c) of a converter (200; 400) comprising a plurality of converter sub-units (304, 308, 402a-c), each sub-unit (304, 308, 402a-c) comprising at least one switching element of the converter (200; 400), the controller (302) comprising:
an interface (310) configured to receive a data packet transmitted from a second sub-unit (304, 308, 402a-c) of the converter (200; 400), the data packet comprising status information of the second sub-unit (304, 308, 402a-c); and
processing circuitry (312) configured to process the data packet to determine control data to control at least one operation of the first sub-unit (304, 308, 402a-c).

2. A controller (302) as claimed in claim 1, in which the controller (302) is to control switching of at least one switching element of the first sub-unit based on the control data.

3. A controller (302) as claimed in any preceding claim, wherein:
the interface (310) is configured to receive an indication of at least one of a status of the converter (200; 400) and a status of an electrical network; and
the processing circuitry (312) is configured to process the received indication to determine control data to control at least one operation of the first sub-unit (304, 308, 402a-c).

4. A controller (302) as claimed in any preceding claim, wherein:
the interface (310) is configured to receive data packets from a plurality of sub-units (304, 308, 402a-c); and
the processing circuitry (312) is configured to process the received data packets to determine control data to control at least one operation of the first sub-unit (304, 308, 402a-c).

5. A controller (302) as claimed in any preceding claim, in which the interface (310) is further configured to transmit a data packet comprising status information of the first sub-unit (304, 308, 402a-c).

6. A controller (302) as claimed in claim 5, wherein the status information comprises at least one of:
a presence of a fault condition in the second sub-unit (304, 308, 402a-c);
a command state of the second sub-unit (304, 308, 402a-c);
a total achievable voltage of the second sub-unit (304, 308, 402a-c);
a voltage level of the second sub-unit (304, 308, 402a-c);
a health of the second sub-unit (304, 308, 402a-c);
a switching state of the second sub-unit (304, 308, 402a-c);
an indication of a currently implemented switching strategy of the second sub-unit (304, 308, 402a-c);
an electrical parameter of the second sub-unit (304, 308, 402a-c);
a thermal parameter of the second sub-unit (304, 308, 402a-c).

7. A method of operating a converter (200; 400) comprising a plurality of sub-units (304, 308, 402a-c), the method comprising:
transmitting, from a first sub-unit (304, 308, 402a-c) of the converter (200; 400), a data packet comprising status information of the first sub-unit (304, 308, 402a-c);
receiving the data packet at a second sub-unit (304, 308, 402a-c) of the converter (200; 400); and
controlling at least one operation of the second sub-unit (304, 308, 402a-c) at least in part based on the received data packet.

8. A method as claimed in claim 7, wherein the data packet comprises data describing an operational state of the first sub-unit (304, 308, 402a-c).

9. A method as claimed in claim 7 or 8 in which controlling at least one operation of the second sub-unit (304, 308, 402a-c) comprises controlling at least one of a switching state of the second sub-unit (304, 308, 402a-c) or a data transmission of the second sub-unit (304, 308, 402a-c).

10. A converter (200; 400) comprising a plurality of converter sub-units (304, 308, 402a-c), each converter sub-unit (304, 308, 402a-c) comprising at least one switching element of the converter (200; 400), wherein a first sub-unit (304, 308, 402a-c) is adapted to transmit a data packet comprising status information to a second sub-unit (304, 308, 402a-c), and the second sub-unit (304, 308, 402a-c) is adapted to implement at least one control operation based at least in part on a received data packet.

11. A converter (200; 400) as claimed in claim 10 wherein the first sub-unit (304, 308, 402a-c) comprises a wireless transmitter for transmitting data packets and the second sub-unit (304, 308, 402a-c) comprises a wireless receiver for receiving data packets.

12. A converter (200; 400) as claimed in any of claims 10 to 11, the converter (200; 400) further comprising a monitoring and control unit (408), wherein the first sub-unit (304, 308, 402a-c) is adapted to transmit data packets comprising status information to the monitoring and control unit (408) and to receive control data therefrom.

13. A converter (200; 400) as claimed in any of claims 10 to 12 wherein the second sub-unit (304, 308, 402a-c) is adapted to receive data packets from a plurality of other sub-units (304, 308, 402a-c), and further adapted to receive an indication of at least one of a status of the converter (200; 400) and a status of an electrical network, and to implement a control implement a control operation based on the received data packets and the received indication(s).

14. A converter (200; 400) as claimed in in any of claims 11 to 13, wherein each sub-unit is adapted to communicate with a subset of the plurality of sub-units (304, 308, 402a-c).

15. A converter (200; 400) as claimed in any of claims 10 to 14, wherein the sub-units (304, 308, 402a-c) are voltage sources of a voltage source converter (200; 400).
